# EUROPEAN PATENT APPLICATION

(11) **EP 4 456 347 A1**
(43) Date of publication of application: **30.10.2024**
(21) Application number: 24172563.9
(22) Date of filing: 25.04.2024
(51) Int. Cl.: H02G 3/04

(54) **KIT FOR FORMING PIPE AND CABLE PROTECTION PIPE**

(30) Priority: 28.04.2023 FI 20235478
(71) Applicant: Uponor Infra Oy, 00240 Helsinki (FI)
(72) Inventor: VALOLA, Jonne, 00240 Helsinki (FI); HJELM, Ellinor, 00240 Helsinki (FI); JUVONEN, Neea, 00240 Helsinki (FI); MIKKOLA, Harri, 00240 Helsinki (FI)
(74) Representative: Fenner, Seraina

(57) **Abstract**

According to an example aspect of the present invention, there is provided a kit (100) for forming a pipe, such as a cable protection pipe (200), which pipe is elongated along an axis (X), which kit (100) comprises two identical pipe halves (110, 120) configured to extend in a dimension of the axis (X), and one or more than one locking latch(es) (130), which is/are configured to engage the pipe halves (110, 120) together.

## Description

### FIELD

The present invention relates to cable protection pipes and particularly to cable protection pipes comprising of two halves.

### BACKGROUND

Cable protection pipes are used to protect active cables, such as electrical or communications cables. Cable protection pipes provide mechanical protection for the cables. They enable repairing and replacing of parts of a damaged length of cable or cable protection without the need for splicing and jointing the cable.

Generally known cable protection pipes have two different halves with a hinge and sliding locking elements for connecting the halves together. However, the known cable protection pipes are difficult to assemble. Installer has to bend down to accurately place the halves together and reach down to the ground to slide the sliding locking elements to lock and unlock the assembly. The sliding locking elements have a tendency to get stuck to get stuck due to the dirt. Furthermore, producing two different halves is more expensive, because two different molds are needed to manufacture them.

An object of the present invention is to mitigate at least some of the above-mentioned problems. An object of the present invention is to provide a cable protection pipe, which is easier and more ergonomic to install. A further object is to provide a cable protection pipe, which is inexpensive and easy to produce.

### SUMMARY

According to a first aspect of the present disclosure, there is provided a kit for forming a pipe, such as a cable protection pipe, which pipe is elongated along an axis, which kit comprises:
- two identical pipe halves configured to extend in a dimension of the axis, and
- one or more than one locking latch(es), which is/are configured to engage the pipe halves together.

Significant benefits are gained with aid of the present method. The two identical pipe halves are less expensive to produce, because only one mold is needed to produce the halves. Less expensive in this context refers to the fact, that two identical halves can be manufactured with one mold, in contrast to having two separate molds for two dissimilar halves. Furthermore, the logistics of the product are simpler due to having only one pipe half component instead of two different pipe half components. In addition, the assembly of a cable protection pipe is simpler, because there is no need to distinguish and identify the halves from each other. Furthermore, the locking latch(es) provide(s) reliable connection between the pipe halves.

One or more embodiments may comprise one or more features from the following itemized list:
- the pipe halves have first edges and second edges extending in a dimension of the axis
- first edges comprise male connectors and/or female connectors
- the second edges comprise male connectors and/or female connectors
- the male connectors and the female connectors alternate in the dimension of the axis in each of the edges
- the male connectors are teeth
- the female connectors are cavities
- the first edge of a first half of the pipe halves is configured to be connected to the second edge of a second half of the pipe halves
- the second edge of the first half of the pipe halves is configured to be connected to the first edge of the second half of the pipe halves
- the locking latch(es) is/are configured to extend along an outer surface of the pipe half, when the locking latch(es) is/are connected to the pipe half and is/are in a locked position
- the pipe halves comprise recesses for receiving the locking latch(es)
- the pipe halves comprise of opening hollows
- the opening hollows are in connection with the recesses
- the pipe halves comprise one or more than one pair(s) of protrusions on outer surfaces of the pipe halves, which protrusions of the pair(s) are arranged on opposite sides of the axis
- the protrusions of the pairs of protrusions are arranged at the same distance from an end of the pipe half in the dimension of the axis
- the pairs of the protrusions are evenly spaced
- (each of) the locking latch(es) comprise(s) two apertures
- (each of) the locking latch(es) comprise(s) two locking claws
- the locking claws comprise of locking teeth
- the locking teeth are protrusions formed on surfaces of the locking claws, which surfaces are configured to set in contact with the protrusions
- the apertures of the locking latch(es) are configured to be connected to the protrusions of the first pipe half to connect the locking latch(es) to the first pipe half
- the locking claws of the locking latch(es) are configured to engage the protrusions of the second pipe half to connect the second pipe half to the first pipe half
- both of the pipe halves comprise of one or more than one pair(s) of the locking groove(s) on the outer surfaces of the pipe halves, of which locking grooves of the pair(s) are arranged to be on the opposite sides of the axis
- (each of) the locking latch(es) comprises of one or more than one pair(s) of locking ribs on (an) inner surface(s) of the locking latch(es)
- both of the pipe halves comprise one or more than one pair(s) of the locking groove(s) on the outer surfaces of the pipe halves, of which locking grooves of the pair(s) are arranged to be on the opposite sides of the axis, and (each of) the locking latch(es) comprises of one or more than one pair(s) of locking ribs on (an) inner surface(s) of the locking latch(es)

According to a second aspect of the present disclosure, there is provided a cable protection pipe, comprising one or more than one kit(s), wherein:
- the locking lath(es) are connected to the first pipe half of the pipe halves,
- the first edge of the first half of the pipe halves is connected to the second edge of the second half of the pipe halves,
- the second edge of the first half of the pipe halves is connected to the first edge of the second half of the pipe halves, and
- the locking lath(es) are in the locked position.

According to a third aspect of the present disclosure, there is provided use of the cable protection pipe as a cable protector, such as an electrical or communications cable protector, when a cable is placed inside the cable protector pipe.

According to a fourth aspect of the present disclosure, there is provided a method for assembling a pipe, such as a cable protection pipe, the method comprises:
- providing the kit,
- connecting the locking latch(es) to the first pipe half of the pipe halves,
- connecting the pipe halves together by arranging the edges of the pipe halves in connection, and
- engaging the locking claws to the protrusions of the second pipe half to connect the second pipe half to the first pipe half.

### BRIEF DESCRIPTION OF THE DRAWINGS

FIGURE 1 illustrates a kit for forming a cable protection pipe in accordance with at least some embodiments;
FIGURE 2 illustrates a perspective view of a cable protection pipe in accordance with at least some embodiments;
FIGURE 3 illustrates a top view of a cable protection pipe in accordance with at least some embodiments;
FIGURE 4 illustrates a cross section view of a cable protection pipe in accordance with at least some embodiments;
FIGURE 5 illustrates a cross section view of a male connector and a female connector in accordance with at least some embodiments;
FIGURE 6 illustrates male connectors and female connectors in accordance with at least some embodiments;
FIGURE 7 illustrates pipe halves comprising locking grooves and locking latches in an open position in accordance with at least some embodiments;
FIGURE 8 illustrates a cable protection pipe comprising pipe halves comprising locking grooves and locking latches in a locked position in accordance with at least some embodiments; and
FIGURE 9 illustrates a locking latch in accordance with at least some embodiments.

### EMBODIMENTS

In the present context, the term "pipe half' refers to a structure that has the shape of a longitudinally truncated pipe, typically a half cylinder shape. For example, when a pipe is cut into two equal pieces parallel to the length of the pipe, the two parts thus obtained are called pipe halves.

In the present context, the term "locking latch" refers to a mechanical fastener configured to connect pipe halves together when in a locked position, but allows the pipe halves to be separated when in an open position.

In the present context, the terms "first edge" and "second edge" refer to the two edges in a pipe half which extend along the longitudinal dimension of the pipe half. For example, if the first edges and the second edges in two pipe halves are placed face-to-face, the halves form a whole pipe, typically with a cylinder shape.

In the present context, the terms "male connector" and "female connector" refer to parts, which have shapes that match each other so that said parts can be mated and engaged or locked with each other.

In the present context, the term "outer surface" refers to surfaces of pipe halves and a cable protection pipe, which are essentially in contact with the ground, when the pipe halves or the cable protection pipe is/are or have been placed on the ground.

In the present context, the term "open position" refers to a position of a locking latch in which the locking latch is not engaged with a protrusion of a pipe half. When the locking latch or all the locking latches are in the open position, the pipe halves can be detached from each other.

In the present context, the term "locked position" refers to a position of a locking latch in which the locking latch is engaged with a protrusion of a pipe half. When the locking latch or all the locking latches are in the locked position, the pipe halves cannot be detached from each other.

In the present context, the term "non-virgin" refers to reprocessed and/or recycled material.

According to an embodiment, there is provided a kit 100 for forming a pipe, such as a cable protection pipe 200, which pipe 200 is elongated along an axis X, which kit 100 comprises:
- two identical pipe halves 110, 120 configured to extend in a dimension of the axis X, and
- one or more than one locking latch(es) 130, which is/are configured to engage the pipe halves 110, 120 together.

Typically, each of the pipe halves 110, 120 has an overall shape of a half cylinder, and the pipe has an overall shape of a cylinder. After said engagement, the pipe halves 110, 120 form the pipe.

The two identical pipe halves 110, 120 are less expensive to produce, because only one mold is needed to produce the halves. Less expensive in this context refers to the fact, that two identical halves can be manufactured with one mold, in contrast to having two separate molds for two dissimilar halves. Furthermore, the logistics of the product are simpler due to having only one pipe half component instead of two different pipe half components. In addition, the assembly of a cable protection pipe is simpler, because there is no need to distinguish and identify the halves from each other. Furthermore, the locking latch(es) provide(s) reliable connection between the pipe halves.

Preferably, the number of the locking latches 130 is at least one.

Preferably, the number of the locking latches 130 is three. This enables reliable connection between the pipe halves 110, 120, because the pipe halves 110, 120 can be attached together at several attachment points. Consequently, the pipe halves 110, 120 attach together more firmly.

However, the number of the locking latches 130 can be one, two or more than three. The number of the locking latches can be selected according to the length of the protection pipe 200. In a short cable protection pipe 200, such as in a cable protection pipe having a length of under 0.5 m, one locking latch 130 may be sufficient. Three or more than three locking latches 130 may be needed in a longer cable protection pipe 200, such as in a cable protection pipe having a length of 0.5 m or more than 0.5 m.

The length of the cable protection pipe 200 can be 0.5 to 1.5 m, such as 0.8 to 1.2 m, preferably about 1 m.

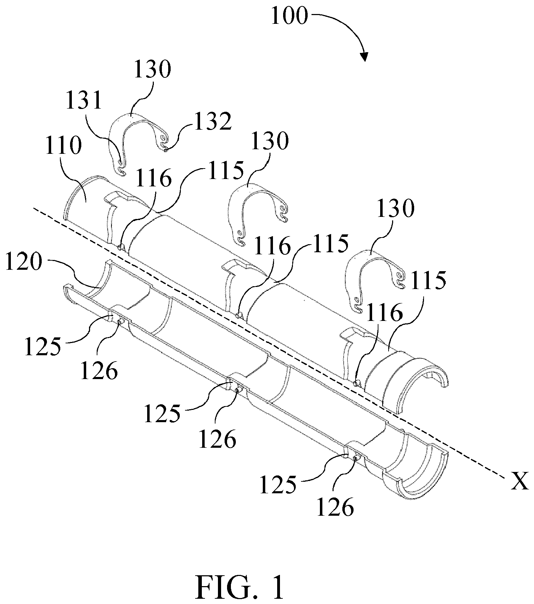

FIGURE 1 illustrates a kit 100 for forming a cable protection pipe. The kit 100 comprises two identical pipe halves 110, 120. The halves 110, 120 have a form of a U-shaped flute. The pipe halves 110, 120 extend in a dimension of an axis X. The kit 100 comprises three locking latches 130.

According to an embodiment, the pipe halves 110, 120 have first edges 111, 121 and second edges 112, 12 extending in a dimension of the axis X, which first edges 111, 121 comprise male connectors 113a, 123a and/or female connectors 113b, 123b, and the second edges 112, 122 comprise male connectors 113a, 123a and/or female connectors 113b, 123b. This facilitates connecting the pipe halves together and enables engaging the pipe halves more firmly together during the assembly of the cable protection pipe.

In some embodiments, the connectors in the first edges may consist of male connectors 113a, 123a only or alternatively of female connectors 113b, 123b only. The connectors in the second edges may respectively consist of female connectors 113b, 123b only or alternatively of male connectors 113a, 123a only.

For example, the first edges 111, 121 can comprise only of male connectors 113a, 123a and the second edges 112, 122 can comprise only of female connectors 113b, 123b, or vice versa. So, the first edges 111, 121 and the second edges 112, 122 can comprise only one type of the connectors.

The male connectors 113a, 123a and the female connectors 113b, 123b can be uniform connectors. In other words, the male connectors 113a, 123a and the female connectors 113b, 123b may comprise only one part, which extends in the dimension of the axis X.

Alternatively, the male connectors 113a, 123a and the female connectors 113b, 123b can be formed of several parts. The connectors may have a free space between the adjacent parts of the connectors. So, the male connectors 113a, 123a and the female connectors 113b, 123b may therefore be discontinuous.

Preferably, the first edges 111, 121 comprise of both the male connectors 113a, 123a and the female connectors 113b, 123b and the second edges 112, 122 comprise of both male connectors 113a, 123a and female connectors 113b, 123b. This prevents the pipe halves from sliding to away from each other in the dimension of the axis X, which may be more likely in the situation where the edges comprise of only one type of connectors.

The connectors 113a, 123a, 113b, 123b can be placed so that the male connectors 113a, 123a engage with the female connectors 113b, 123b, when the pipe halves 110, 120 are connected together. In other words, the male connectors 113a, 123a and the female connectors 113b, 123b can be arranged at respective points at the first edges 111, 121 and the second edges 112, 122 in the dimension of the axis X.

The first edges 111, 121 and the second edges 112, 122 may have the male connectors 113a, 123a and the female connectors 113b, 123b at least partly or over the entire length of the edges 111, 121, 112, 122 in the dimension of the axis X. For example, there may a portion at ends of the edges 111, 121, 112, 122, which is free from the connectors 113a, 123a, 113b, 123b.

According to an embodiment, the male connectors 113a, 123a and the female connectors 113b, 123b alternate in the dimension of the axis X in each of the edges 111, 121, 112, 122. This enables engaging the pipe halves more firmly together during the assembly of the cable protection pipe. This also prevents the pipe halves from sliding to different directions from each other in the dimension of the axis X.

According to an embodiment, the male connectors 113a, 123a are teeth and the female connectors 113b, 123b are cavities. So, the male connectors 113a, 123a can be protrusions and the female connectors 113b, 123b can be grooves. The shapes of the connectors 113a, 123a, 113b, 123b can match each other so that they can be engaged firmly together. The shape of the male connectors 113a, 123a and the female connectors 113b, 123b can be at least substantially rectangular or any other suitable shape, such as a half circle or a triangle.

Preferably, the connectors 113a, 123a, 113b, 123b are formed during the manufacturing of the pipe halves 110, 120. However, it is possible to manufacture the pipe halves 110, 120 and the connectors separately and connect the connectors to the pipe halves 110, 120.

According to an embodiment, the first edge 111 of a first half 110 of the pipe halves 110, 120 is configured to be connected to the second edge 122 of a second half 120 of the pipe halves 110, 120, and the second edge 112 of the first half 110 is configured to be connected to the first edge 121 of the second half 120. This enables connecting the identical halves 110, 120 together.

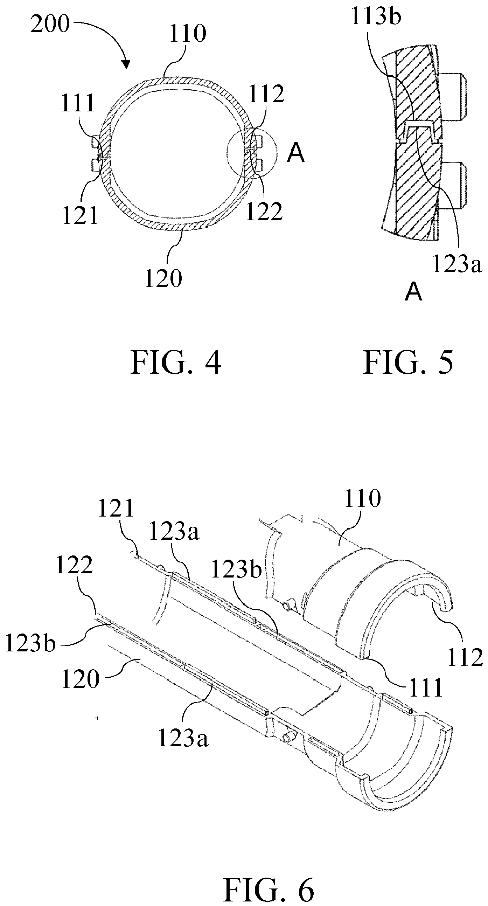

FIGURE 4 illustrates a cross section view of a cable protection pipe 200. The first edge 111 of a first half 110 of the pipe halves 110, 120 is connected to the second edge 122 of a second half 120 of the pipe halves 110, 120, and the second edge 112 of the first half 110 is connected to the first edge 121 of the second half 120.

FIGURE 5 illustrates a cross section view of a male connector 123a and a female connector 113b. The male connector 123a is a protrusion and the female connector 113b is a cavity. The male connector 123a is arranged inside the female connector 113b providing a firm attachment between the pipe halves 110, 120.

FIGURE 6 illustrates male connectors 113a, 123a and female connectors 113b, 123b. The male connectors 113a, 123a and the female connectors 113b, 123b alternate in the dimension of the axis X. The male connectors 113a, 123a and the female connectors 113b, 123b are arranged at respective points at the first edges 111, 121 and the second edges 112, 122 in the dimension of the axis X, so that the male connectors 113a, 123a can engage with the female connectors 113b, 123b, when the pipe halves 110, 120 are connected together. There may be portions at ends of the edges 111, 121, 112, 122, which are free from the connectors.

According to an embodiment, the locking latch(es) 130 is/are configured to extend along an outer surface of the pipe half 110, 120, when the locking latch(es) 130 is/are connected to the pipe half 110, 120 and is/are in a locked position. Thus, the locking latch(es) 130 have substantially similar shape than a cross section of the pipe halves 110, 120 when viewed in the dimension of the axis X. Thus, the locking latch(es) 130 can have substantially a U-shape. The locking latch(es) 130 can extend along an outer surface of the pipe half 110, 120 so that there is no or only small clearance between the locking latch(es) 130 and the pipe half 110, 120. This secures the attachment of the locking latch(es) 130 and prevents dirt from entering between the locking latch(es) 130 and the pipe half 110, 120, when the locking latch(es) 130 is/are in the locked position.

According to an embodiment, the pipe halves 110, 120 comprise recesses 115, 125 for receiving the locking latch(es) 130. So, the locking latch(es) settle(s) at the level of the outer surface of the cable protection pipe or preferably slightly below it, when the locking latch(es) is/are connected to the pipe half 110, 120 and in the locked position. Then, the locking latch(es) do not accidentally disengage from the locked position if, for instance the cable protection pipe 200 is pulled along the ground.

A material thickness of walls of the pipe halves 110, 120 can be thus smaller at the recesses 115, 125. In addition, an outer diameter of the cable protection pipe 200 may thus be smaller at the recesses 115, 120 than a greatest diameter of the cable protection pipe.

Preferably, sizes of the recesses 115, 120 are large enough to enable movement of the locking latch(es) 130 between the open position and the locked position.

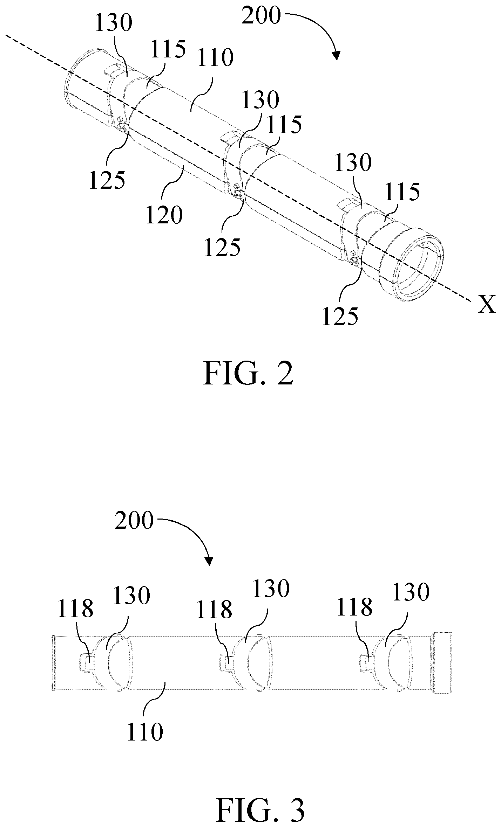

FIGURE 2 illustrates a perspective view of a cable protection pipe 200. Pipe halves 110, 120 are connected together. Locking latches 130 are in a locked position and extend along an outer surface of a first pipe half 110. The pipe halves 110, 120 comprise recesses 115, 125 for receiving the locking latches 130.

FIGURE 3 illustrates a top view of a cable protection pipe 200. Pipe halves 110, 120 are connected together. Locking latches 130 are in a locked position and extend along an outer surface of a first pipe half 110. The pipe halves 110, 120 comprise of recesses 115, 125 for receiving the locking latches 130. The pipe halves 110, 120 further comprise of opening hollows 118, 128, which are in connection with the recesses 115, 125. The opening hollows 118, 128 facilitate opening of the locking latches, allowing fingers to easily slid underneath of the locking latch for opening the locking latch.

According to an embodiment, the pipe halves 110, 120 comprise one or more than one pair(s) of protrusions 116, 126 on outer surfaces of the pipe halves 110, 120, which protrusions 116, 126 of the pair(s) are arranged on opposite sides of the axis X. The protrusions 116, 126 enable connecting the locking latch(es) 130 to the pipe half 110, 120.

The protrusions 116, 126 can extend substantially perpendicularly to the dimension of the axis X.

The protrusions 116, 126 can comprise steps on outer surfaces of the protrusions 116, 126. Heights of the steps can be 0.1 to 0.7 mm, preferably 0.5 mm.

The protrusions 116, 126 can be formed at or near the edges 111, 112, 121, 122 of the pipe halves 110, 120. For example, the protrusions 116, 126 can be formed at a distance of 0 to 50 mm, preferably less than 40 mm, from the edges 111, 112, 121, 122. Forming the protrusions at or near the edges enables directing locking force of the locking latch(es) to an area, where the highest possible mechanical leverage with regards to locking the pipe halves together firmly is achieved.

Preferably, a number of the pairs of the protrusions 116, 126 is the same as the number of the locking latches. For example, when the kit 100 comprises of three locking latches 130, both of the pipe halves 110, 120 can comprise of three pairs of protrusions, i.e. a total of six protrusions 116, 126 per pipe half 110, 120.

Preferably, the protrusions 116, 126 of the pairs of protrusions 116, 126 are arranged at the same distance from an end of the pipe half 110, 120 in the dimension of the axis X. This enables more reliable functioning of the locking latch(es) 130.

Preferably, the pairs of the protrusions 116, 126 are evenly spaced. This enables arranging the locking latches to be evenly spaced along the axis X, which allows uniform distribution of the locking force in the elongation dimensions of the cable protection pipe 200. This in turn provides a more reliable connection between the pipe halves 110, 120.

A cross section shape of the protrusions 116, 126 can be round or any other suitable shape.

The cross-section shape of the protrusions 116, 126 can be a half circle. Then, the protrusion 116, 126 can be formed at the edges 111, 121, 112, 122 of the pipe halves 110, 120 so that they form together a protrusion having a round cross section shape.

According to an embodiment, (each of) the locking latch(es) 130 comprise(s) two apertures 131. The apertures enable connecting the locking latch(es) to the protrusions 116 of the first pipe half 110.

The apertures 131 can be arranged at ends or end portions of the locking latch(es) 130. The apertures 131 can extend perpendicularly to the dimension of the axis X, when the locking latch(es) is/are connected to the pipe half 110, 120.

A shape of the apertures 131 can be round or any other suitable shape. Preferably, the shape of the apertures 131 correspond the cross-section shape of the protrusions 116, 126.

The apertures 131 may have a closed or open perimeter. For example, the apertures 131 may form an open, C-shaped area with the locking claws 132.

According to an embodiment, (each of) the locking latch(es) 130 comprise(s) two locking claws 132. The locking claws 132 enable engaging the locking latch(es) to the protrusions 126 of the second pipe half 120.

The locking claws 132 can be formed at ends or end portions of the locking latch(es) 130. The locking claws 132 can extend substantially in the dimension of the axis X, when the locking latch(es) is/are connected to the pipe half 110, 120.

The locking claws 132 can comprise locking teeth 133. The locking teeth 113 can be protrusions formed on surfaces of the locking claws 132, the surfaces of which are configured to become in contact with the protrusions 116, 126, when the locking latch(es) is/are connected to the pipe half 110, 120 and are engaged in the closed position. The locking teeth 113 enable engaging the locking claws with the protrusions more firmly.

According to an embodiment, the apertures 131 of the locking latch(es) 130 are configured to be connected to the protrusions 116 of the first pipe half 110 to connect the locking latche(s) 130 to the first pipe half 110. This enables reliable and simple connection of the locking latch(es) 130 to the first pipe half 110.

According to an embodiment, the locking claws 132 of the locking latch(es) 130 are configured to engage the protrusions 126 of the second pipe half 120 to connect the second pipe half 120 to the first pipe half 110. This enables reliable connection between the pipe halves 110, 120. Thus, the pipe halves 110, 120 stay firmly connected even if cable protection pipe 200 is dragged along the ground or otherwise be subjected to external forces which work to move pipe halves 110,120 away from each other.

According to an embodiment, both of the pipe halves 110, 120 comprise one or more than one locking groove(s) 117, 127 on the outer surfaces of the pipe halves 110, 120 and (each of) the locking latch(es) 130 comprise one or more than one locking ribs 134 on (an) inner surface(s) of the locking latch(es) 130 to engage the locking latch(es) 130 to the open position. Consequently, the locking latch(es) 130 remain in the open position, when the first pipe half 110 is placed on the second pipe half 120. Further, the locking claw(s) 132 do not prevent the first pipe half 110 from settling on the second pipe half 120. This facilitates assembly of the cable protection pipe 200.

Preferably, both of the pipe halves 110, 120 comprise one or more than one pair(s) of the locking groove(s) 117, 127 on the outer surfaces of the pipe halves 110, 120, of which locking grooves 117, 127 of the pair(s) are arranged to be on the opposite sides of the axis X, and (each of) the locking latch(es) 130 comprises of one or more than one pair(s) of locking ribs 134 on (an) inner surface(s) of the locking latch(es) 130. This enables an even more reliable locking of the locking latch(es) to the open position, because the locking latch(es) are engaged to the pipe half on both sides.

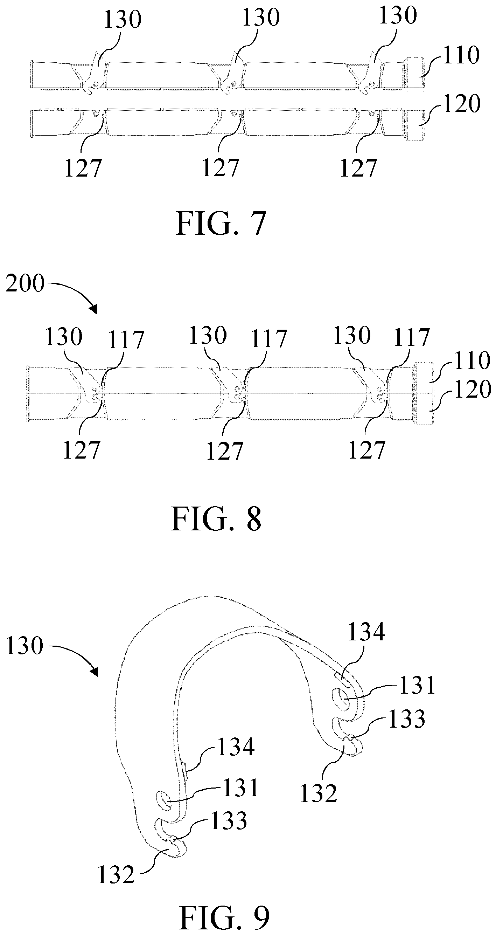

FIGURE 7 illustrates pipe halves 110, 120 comprising of locking grooves 117, 127 and locking latches 130 in an open position. Three locking latches 130 are connected to the first pipe half 110. The locking latches 130 are in an open position, so the locking grooves 117 of the first pipe half 110 are covered by the locking latches and thus not shown. The second pipe half 120 comprises three locking grooves 127, so a number of the locking grooves 127 correspond a number of the locking latches 130. The locking lathes 130 are locked in the open position with an aid of the locking grooves. The locking lathes 130 are in a position in which the first pipe half 110 can be easily placed on the second pipe half 120.

FIGURE 8 illustrates a cable protection pipe 200 comprising pipe halves 110, 120 comprising of locking grooves 117, 127 and locking latches 130 in a locked position. A first pipe half 110 is placed on a second pipe half 120. The locking grooves 117 of the first pipe half 110 are shown due to the position of the locking latches 130.

FIGURE 9 illustrates a locking latch 130. The locking latch 130 has a U-shape. The locking latch 130 comprises of two apertures 131. The apertures 131 are arranged at the end portions of the locking latch 130. Preferably, the apertures 131 are round. The locking latch 130 comprises two locking claws 132. The locking claws 132 are formed at the ends of the locking latches 130. The locking claws 132 comprise of locking teeth 133.

The pipe halves 110, 120 and/or the locking latch(es) 130 can be produced from plastic. The pipe halves 110, 120 and/or the locking latch(es) 130 can consists essentially of a virgin or non-virgin polypropylene (PP), polyethylene (PE) or polyvinyl chloride (PVC).

The locking latch(es) 130 can have different colors, such as red, blue and yellow. A different color latch(es) 130 can be used to signal a different type of cable being protected.

According to an embodiment, a cable protection pipe 200 comprises one or more than one kit(s) 100, wherein:
- the locking lath(es) 130 are connected to the first pipe half of the pipe halves 110, 120,
- the first edge 111 of a first half 110 of the pipe halves 110, 120 is connected to the second edge 122 of a second half 120 of the pipe halves 110, 120,
- the second edge 112 of the first half 110 of the pipe halves 110, 120 is connected to the first edge 121 of the second half 120 of the pipe halves 110, 120, and
- the locking lath(es) 130 are in a locked position.
A plurality of cable protection pipes 200 can be connected together at least substantially into alignment in the elongation dimension to form longer cable protection pipes. However, there may be a deviation of 5 to 15 degrees between pipes in the elongation dimension. Thus, it is easier to form longer entities, because it is easier to handle shorter cable protection pipes and form larger entities of them only at the installation site.

A first end of the cable protection pipe 200 can comprise a socket and the second end of the cable protection pipe 200 can comprise a projection. The socket is configured to engage the projection. This enables connecting a plurality of cable protection pipes 200 together along the axis X.

According to an embodiment, the cable protection pipe 200 comprises one or more than one further pipe(s) connected together with the cable protection pipe 200. The further pipe(s) can be a one-piece plastic pipe, for example.

According to an embodiment, the cable protection pipe 200 is a cable protector, such as an electrical or communications cable protector, when a cable is placed inside the cable protection pipe 200.

The cable protection pipe 200 can be reused several times by disassembling and reassembling it.

The locking latch(es) 130 can be replaced new ones if they break or a different color latch(es) 130 are needed to signal a different type of cable being protected.

According to an embodiment, there is provided a pipe half 110, 120 for forming a pipe, such as a cable protection pipe 200, which is elongated along an axis X, which pipe half 110, 120 comprises a first edge 111, 121 and a second edge 112, 122 extending along the axis X, which first edge 111, 121 comprises of male connectors 113a, 123a and/or female connectors 113b, 123b, and the second edge 112, 122 comprises of male connectors 113a, 123a and/or female connectors 113b, 123b.

According to an embodiment, the male connectors 113a, 123a and the female connectors 113b, 123b alternate in a dimension of the axis X in both of the edges (111, 121, 112, 122).

According to an embodiment, the male connectors 113a, 123a are teeth and the female connectors 113b, 123b are cavities.

According to an embodiment, the pipe half 110, 120 comprises one or more than one recesse(s) 115, 125 for receiving locking latche(s) 130.

According to an embodiment, the pipe half 110, 120 comprises one or more than one pair(s) of protrusions 116, 126 on an outer surface of the pipe half 110, 120, of which protrusions 116, 126 of the pair(s) are arranged on opposite sides of the axis X.

A method for assembling a pipe, such as a cable protection pipe 200, the method comprises:
- providing the kit 100 as described above,
- connecting the locking latch(es) 130 to the first pipe half of the pipe halves 110, 120,
- connecting the pipe halves 110, 120 together by arranging the edges 111, 121, 112, 122 of the pipe halves 110, 120 in connection, and
- engaging the locking claws 132 to the protrusions 126 of the second pipe half 120 to connect the second pipe half 120 to the first pipe half 110.

The method provides an easy and ergonomic assembly of the cable protection pipe. The pipe halves are easy to arrange together by placing the edges of the pipe halves in connection. Furthermore, innovative locking latch facilitates engaging the pipe halves firmly together.

FIGURES 7 and 8 illustrates an assembly of the cable protection pipe 200. First, it is provided a first pipe half 110 and a second pipe half 120. The locking lathes 130 can be already connected to the first pipe half 110 or they can be connected just at the installation site. Then, the second pipe half 120 is placed on the ground. After that, the locking latches 130 are arranged in the open position and the first pipe half 110 is placed on the second pipe half 120. When the edges 111, 121, 112, 122 of the pipe halves 110, 120 are connected, the locking latches are moved in the locked positions to engage the pipe halves 110, 120 together.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Furthermore, the described features, structures, or characteristics may be combined in any suitable manner in one or more embodiments. In the description, numerous specific details are provided, such as examples of lengths, widths, shapes, etc., to provide a thorough understanding of embodiments of the invention.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### REFERENCE SIGNS LIST

- 100: kit
- 110, 120: pipe half
- 111, 121: first edge
- 112, 122: second edge
- 113a, 123a: male connector
- 113b, 123b: female connector
- 115, 125: recess
- 116, 126: protrusion
- 117, 127: locking groove
- 118, 128: opening hollow
- 130: locking latch
- 131: aperture
- 132: locking claw
- 133: locking tooth
- 134: locking rib
- 200: cable protection pipe

## Claims

1. A kit (100) for forming a pipe, such as a cable protection pipe (200), which pipe is elongated along an axis (X), which kit (100) comprises:
- two identical pipe halves (110, 120) configured to extend in a dimension of the axis (X), and
- one or more than one locking latch(es) (130), which is/are configured to engage the pipe halves (110, 120) together.

2. The kit (100) of claim 1, wherein the pipe halves (110, 120) have first edges (111, 121) and second edges (112, 122) extending in a dimension of the axis (X), which first edges (111, 121) comprise male connectors (113a, 123a) and/or female connectors (113b, 123b), and the second edges (112, 122) comprise male connectors (113a, 123a) and/or female connectors (113b, 123b).

3. The kit (100) of claim 2, wherein the male connectors (113a, 123a) and the female connectors (113b, 123b) alternate in the dimension of the axis (X) in each of the edges (111, 121, 112, 122).

4. The kit (100) of claim 2 or 3, wherein the male connectors (113a, 123a) are teeth and the female connectors (113b, 123b) are cavities.

5. The kit (100) of claim any one of the preceding claims 2 to 4, wherein:
- the first edge (111) of a first half (110) of the pipe halves (110, 120) is configured to be connected to the second edge (122) of a second half (120) of the pipe halves (110, 120), and
- the second edge (112) of the first half (110) of the pipe halves (110, 120) is configured to be connected to the first edge (121) of the second half (120) of the pipe halves (110, 120).

6. The kit (100) of any one of the preceding claims, wherein the locking latch(es) (130) is/are configured to extend along an outer surface of the pipe half (110, 120), when the locking latch(es) (130) is/are connected to the pipe half (110, 120) and is/are in a locked position.

7. The kit (100) of any one of the preceding claims, wherein the pipe halves (110, 120) comprise recesses (115, 125) for receiving the locking latch(es) (130).

8. The kit (100) of any one of the preceding claims, wherein the pipe halves (110, 120) comprise one or more than one pair(s) of protrusions (116, 126) on outer surfaces of the pipe halves (110, 120), which protrusions (116, 126) of the pair(s) are arranged on opposite sides of the axis (X).

9. The kit (100) of any one of the preceding claims, wherein (each of) the locking latch(es) (130) comprise(s) two apertures (131).

10. The kit (100) of any one of the preceding claims, wherein (each of) the locking latch(es) (130) comprise(s) two locking claws (132).

11. The kit (100) of claims 8 and 9, wherein the apertures (131) of the locking latch(es) (130) are configured to be connected to the protrusions (116) of the first pipe half (110) to connect the locking latch(es) (130) to the first pipe half (110).

12. The kit (100) of claims 8 and 10, wherein the locking claws (132) of the locking latch(es) (130) are configured to engage the protrusions (126) of the second pipe half (120) to connect the second pipe half (120) to the first pipe half (110).

13. The kit (100) of any one of the preceding claims, wherein:
- both of the pipe halves (110, 120) comprise one or more than one locking groove(s) (117, 127) on the outer surfaces of the pipe halves (110, 120), and
- (each of) the locking latch(es) (130) comprise one or more than one locking ribs (134) on (an) inner surface(s) of the locking latch(es) (130)
to engage the locking latch(es) (130) to an open position.

14. A cable protection pipe (200), comprising one or more than one kit(s) (100) of any one of the preceding claims, wherein:
- the locking lath(es) (130) are connected to the first pipe half of the pipe halves (110, 120),
- the first edge (111) of the first half (110) of the pipe halves (110, 120) is connected to the second edge (122) of the second half (120) of the pipe halves (110, 120),
- the second edge (112) of the first half (110) of the pipe halves (110, 120) is connected to the first edge (121) of the second half (120) of the pipe halves (110, 120), and
- the locking latch(es) (130) are in the locked position.

15. Use of the cable protection pipe (200) of claim 14 as a cable protector, such as an electrical or communications cable protector, when a cable is placed inside the cable protector pipe (200).
